# EUROPÄISCHE PATENTSCHRIFT

(11) **EP 3 705 750 B1**
(45) Veröffentlichungstag und Bekanntmachung des Hinweises auf die Patenterteilung: **29.03.2023**
(21) Anmeldenummer: 19161083.1
(22) Anmeldetag: 06.03.2019
(51) Int. Cl.: F16H 37/04

(54) **LASTSCHALTGETRIEBE FÜR LANDMASCHINEN**
POWER SHIFT TRANSMISSION FOR AGRICULTURAL MACHINES
BOÎTE DE VITESSES À COMMANDE SOUS CHARGE POUR MACHINES AGRICOLES

(43) Veröffentlichungstag der Anmeldung: 09.09.2020
(73) Patentinhaber: Deere & Company, Moline, IL 61265 (US)
(72) Erfinder: Gugel, Rainer, 68163 Mannheim (DE); Buhrke, Frank, 68163 Mannheim (DE); Müller, David, 68163 Mannheim (DE); Schumann, Michael, 68163 Mannheim (DE)
(74) Vertreter: Lavall, Christian Henner

(56) Entgegenhaltungen:
- DE-A1-102011 081 520
- DE-A1-102017 209 602
- DE-A1-102017 212 392

## Beschreibung

Die vorliegende Erfindung betrifft ein Lastschaltgetriebe für Landmaschinen.

Bei Lastschaltgetrieben handelt es sich um eine spezielle Form von Fahrzeuggetrieben, bei denen die Übersetzung unter Last, also während der Fahrt, ohne Unterbrechung des Drehmoments geändert werden kann. Dadurch können auch während des Schaltvorgangs Vortriebskräfte übertragen werden, sodass das Fahrzeug auch während des Schaltvorgangs weiter beschleunigen kann. Somit ergeben sich beim Schaltvorgang keine Komforteinbußen. Bei landwirtschaftlichen Nutzfahrzeugen, insbesondere bei Traktoren, werden vorwiegend Lastschaltgetriebe eingesetzt, weil sie insbesondere bei der Arbeit in hügeligem Gelände und auf wechselnden Bodenarten eine schnellere Arbeit ermöglichen und helfen, Kraftstoff zu sparen. Manche Traktorgetriebe sind auch nur teillastschaltbar, das bedeutet, dass nur zwischen manchen Gängen ohne Zugkraftunterbrechung geschaltet werden kann, während andere (zum Beispiel Gruppenwechsel) mit einer Zugkraftunterbrechung verbunden sind.

Es ist bekannt, derartige Getriebe in Verbindung mit Planetengetrieben und Kupplungen in einem Baukastensystem auszubilden, sodass das Lastschaltgetriebe durch entsprechende Ausbildung und Anordnung von Zahnradpaarungen des Planetengetriebes in verschiedenen Betriebsmodi, wie Durchtriebsmodus, Untersetzungsmodus und Reversiermodus betrieben werden können. So werden an Traktoren Lastschaltgetriebe als Getriebevorstufe eingesetzt, die je nach Ausbildung eines Stufenplanetensatzes entweder in den Betriebsmodi Durchtriebsmodus bzw. Reversiermodus oder in den Betriebsmodi Durchtriebsmodus bzw. Untersetzungsmodus betrieben werden können.

Diese Getriebe zeichnen sich dadurch aus, dass in einer ersten Schaltung eine mit einer Eingangswelle verbundene Kupplung die Eingangswelle mit der Ausgangswelle verbindet, sodass das Getriebe im Durchtriebsmodus betrieben werden kann, wobei das Planetengetriebe freiläuft. In einer zweiten Schaltung wird die Kupplung gelöst, sodass der Planetenträger durch die Eingangswelle angetrieben wird und sich der Planetensatz um ein durch eine Bremse festgestelltes erstes Sonnenrad wälzt, durch welches sich die Ausgangswelle erstreckt. Der Abtrieb erfolgt über ein zweites mit der Ausgangswelle verbundenes Sonnenrad, welches von dem Planetensatz angetrieben wird. Je nach Zuordnung des Planetensatzes bzw. Ausbildung der Zahnradsätze von Planetensatz und Sonnenrädern kann das Lastschaltgetriebe im Untersetzungsmodus oder im Reversiermodus betrieben werden.

Somit wird ein zweistufiges Lastschaltgetriebe bereitgestellt, welches jedoch zum einen fertigungstechnisch aufwendig ausgebildet ist und zum anderen einen weiteren Betriebsmodus, beispielsweise ein Kriechgangmodus, in der genannten Anordnung nicht zulässt.

In der EP 0 745 198 B1 werden ein Lastschaltgetriebe für mobile Arbeitsmaschinen sowie ein Verfahren zur Steuerung dieses Lastschaltgetriebes beschrieben. Dabei kommen Hydromotoren zum Einsatz, die über eine Kupplung miteinander verbunden sind. In einem unteren Geschwindigkeitsbereich werden die Hydromotoren drehmomentaddierend zusammengeschaltet. Einer der Hydromotoren wird über eine weitere Kupplung umgestaltet, sodass die Hydromotoren in einer oberen Geschwindigkeitsbereichsdrehzahl addierend betrieben werden können.

In der WO 2013/064371 A1 wird ein Lastschaltgetriebe mit einer Eingangswelle und einer dazu koaxial angeordneten Ausgangswelle beschrieben. Das Lastschaltgetriebe weist einen Planetengetriebesatz auf. Das Planetengetriebe umfasst einen Planetenträger, der mit der Eingangswelle in Verbindung steht. Mit einem Schaltelement ist die erste Ausgangswelle mit der ausgangsseitigen Sonne eines Stufenplanetensatzes verbindbar. Mit einem zweiten Schaltelement ist die erste Ausgangswelle direkt mit der Eingangswelle verbindbar. Das eingangsseitige Sonnenrad des Stufenplanetensatzes ist drehfest mit einem Gehäuseteil des Lastschaltgetriebes verbunden.

DE102011081520 beschreibt ein Lastschaltgetriebe, welches unter den Wortlaut des Oberbegriffs des Anspruchs 1 fällt.

DE102017209602 zeigt ein Lastschaltgetriebe für eine Landmaschine mit einem Getriebegehäuse, einer Eingangswelle und einer Ausgangswelleneinheit, wobei sich die Eingangswelle und die Ausgangswelleneinheit zumindest abstandsweise innerhalb des Getriebegehäuses erstrecken, wobei eine Nebenwelle parallel versetzt zwischen der Eingangswelle und der Ausgangswelleneinheit innerhalb des Getriebegehäuses angeordnet ist, wobei die Eingangswelle und die Nebenwelle über eine Vorschaltgruppe und die Nebenwelle und die Ausgangswelleneinheit über eine Nachschaltgruppe miteinander in Verbindung stehen, wobei jede Schaltgruppe einzelne zu- oder abkoppelbare Zahnradpaare aufweist.

DE102017212392 bezeichnet eine Getriebeanordnung für ein Nutzfahrzeug, die über eine Antriebswelle von einem Fahrzeugmotor drehbar antreibbar ist und eine als Mehrfachsplitter ausgebildeten Lastschaltgruppe, einen der Lastschaltgruppe nachgeordneten Synchrongangteil und eine lastschaltbare Wendegruppe zur Drehrichtungsumkehr sowie eine Ausgangswelle aufweist, von der ein erster Achsantrieb antreibbar ist.

Ausgehend von diesem Stand der Technik, liegt der Erfindung die Aufgabe zugrunde, ein Lastschaltgetriebe anzugeben, dass einerseits mit einer hohen Anzahl von Gang-Varianten bei zugleich kompakter Größe realisierbar ist und dass andererseits für einen breiten Einsatzbereich verwendbar ist.

Diese Aufgabe wird gelöst durch ein Lastschaltgetriebe gemäß Patentanspruch 1.

Mit Zu- bzw. Abkoppeln der einzelnen Zahnradpaare ist im Rahmen dieser Erfindung gemeint, dass die Zahnradpaare entweder miteinander in Eingriff stehen und demnach ein Drehmoment von dem einen Zahnrad auf das andere Zahnrad des Zahnradpaares übertragen werden kann oder dass die Zahnräder eines Zahnradpaares nicht miteinander in Eingriff stehen. Bei zwei miteinander in Eingriff stehenden Zahnrädern handelt es sich folglich um ein zugekoppeltes Zahnradpaar.

Über die Eingangswelle kann das Lastschaltgetriebe mit einer Antriebsmaschine zum Beispiel einen Verbrennungsmotor verbunden werden, sodass das eingespeiste Drehmoment über das Lastschaltgetriebe auf die Ausgangswelleneinheit übertragen werden kann. An der Ausgangswelleneinheit kann dann eine Arbeitsmaschine oder eine Antriebswelle zum Beispiel für Räder angeschlossen werden. In einer bevorzugten Ausgestaltung erfolgt dies über die Hauptausgangswelle.

Insgesamt weist das Lastschaltgetriebe zwei Schaltgruppen, sowie ein Vorgelege auf. Bei einem Vorlege handelt es sich um eine Erweiterung des Schaltgetriebes. Dieses setzt sich üblicherweise aus zwei Vorgelege-Zahnradpaaren zusammen. Diese Vorgelege-Zahnradpaare können in verschiedener Art und Weise miteinander in Verbindung stehen und realisieren zumindest in einem Schaltzustand entweder eine Untersetzung oder eine Übersetzung. Letztendlich können somit mit dem Vorgelege zwei Schaltzustände realisiert werden, wobei ein Schaltzustand für einen niedrigen und ein anderer Schaltzustand für einen hohen Lastzustand vorgesehen sind. Aus diesem Grunde werden die Schaltzustände des Vorgeleges in der Regel mit Hi (high) für den hohen Lastzustand und mit Lo (low) für den niedrigen Lastzustand bezeichnet.

Durch das Vorgelege sowie durch die Vorschalt- und die Nachschaltgruppe mit jeweils mindestens zwei Zahnradpaaren und entsprechend mindestens zwei Schaltzuständen lassen sich eine Vielzahl von einzelnen Gangschaltvarianten realisieren. Die Vorschaltgruppe ermöglicht hierbei die Übertragung eines Drehmomentes zwischen der Eingangswelle und der Nebenwelle, die Nachschaltgruppe die Drehmomentübertragung zwischen der Nebenwelle und der Ausgangswelleneinheit und das Vorgelege zwischen der Hauptausgangswelle und der Nebenausgangswelle.

Dementsprechend ergibt sich die maximale Anzahl von Gangschaltvarianten aus einer Multiplikation der Anzahl der Zahnradpaare der Vorschaltgruppe, der Anzahl der Zahnradpaare der Nachschaltgruppe und der Anzahl der Schaltzustände des Vorgeleges. Bei zumindest zwei Zahnradpaaren in der Vor- und in der Nachschaltgruppe und zwei Schaltzustände im Vorgelege ergibt sich somit eine maximale Anzahl von acht Gangschaltvarianten. Diese Gangzahl kann jedoch in einfacher Art und Weise erhöht werden, in dem weitere Zahnradpaare in der Vorschalt- und /oder in der Nachschaltgruppe ergänzt werden.

Bereits an einer Erhöhung von einem weiteren Zahnradpaar führt es zu zusätzlichen vier Gangschaltvarianten. Durch geringfügige bauliche Änderungen können daher eine Vielzahl von unterschiedlichen Gangschaltvarianten erreicht werden, sodass das Lastgetriebe je nach Anwendung bzw. je nach Typ der Landmaschine individuell angepasst werden kann. Hierzu kann jedoch üblicherweise das Getriebegehäuse sowie auch die vorhandenen Wellen beibehalten werden, da der zusätzliche Einbau von Zahnradpaaren keine diesbezügliche Änderung erfordert.

Dies ist unter anderem darauf zurückzuführen, dass mit relativ wenig Zahnradpaaren bereits eine hohe Anzahl von Gangschaltvarianten erreicht werden kann und durch diese geringe Anzahl von Zahnradpaaren entsprechend nur wenige Kupplungen vorzusehen sind. Bei einem Lastschaltgetriebe ist für jedes Zahnradpaar der Vorschalt- und der Nachschaltgruppe eine eigene Kupplung vorzusehen. Durch die Verwendung eines Vorgeleges kann die Anzahl der Kupplungen gerade bei hohen Gangschaltvarianten reduziert werden, wobei auch das Vorgelege zumindest zwei Kupplungen erfordert.

Bei einer exemplarischen Ausgestaltung mit 32 Gangschaltvarianten weist sowohl die Vorschalt- als auch die Nachschaltgruppe jeweils vier Zahnradpaare auf. Dementsprechend sind zehn Kupplungen für die Realisierung eines solchen Lastschaltgetriebes notwendig.

Sofern auf das Vorgelege verzichtet würde, könnte dieselbe Anzahl von Gangschaltvarianten beispielsweise dadurch erreicht werden, dass für die Vorschaltgruppe acht und für die Nachschaltgruppe zwölf Zahnradpaare vorgesehen sind. Somit wären insgesamt zwölf Kupplungen notwendig. Insgesamt kann daher bei einem erfindungsgemäßen Lastschaltgetriebe im Vergleich auf zwei Kupplungen verzichtet werden. Hierdurch ist es möglich, dass die Baugröße des Lastgetriebes sehr kompakt gehalten werden kann. Außerdem steht innerhalb des Getriebegehäuses ein ausreichender Bauraum zur Verfügung, da eine Erhöhung bzw. eine Verringerung der Zahnradpaaren einfacher Art und Weise ermöglicht.

Die Zahnradpaare weisen jeweils ein Antriebszahnrad und ein Abtriebszahnrad auf, wobei das Drehmoment von dem Antriebszahnrad auf das Abtriebszahnrad übertragen wird. In einer bevorzugten Ausgestaltung sind die Antriebszahnräder der Vorschaltgruppe auf der Eingangswelle und die Abtriebszahnräder der Vorschaltgruppe auf der Nebenwelle angeordnet. Bevorzugt sind dementsprechend die Antriebszahnräder der Nachschaltgruppe auf der Nebenwelle und die Abtriebszahnräder der Nachschaltgruppe auf der Nebenausgangswelle angeordnet.

Hierdurch wird deutlich, dass das Vorgelege der Vorschaltgruppe und der Nachschaltgruppe nachgeordnet ist. Dies hat den Vorteil, dass die Zahnradpaare der Vorschaltgruppe und der Nachschaltgruppe unabhängig von der Schaltung des Vorgeleges immer in die gleiche Richtung drehen, sodass zwischen der Eingangswelle und der Nebenwelle einerseits und der Nebenwelle und der Nebenausgangswelle andererseits immer eine optimierte Verzahnung möglich ist. Ferner lassen sich die Zahnräder auf der Eingangswelle und/oder die Zahnräder der Nebenwelle auch in einfacher Art und Weise verwenden, zusätzliche Antriebseinheiten zu betreiben. Bei derartigen Antriebseinheiten kann es sich beispielsweise um Pumpen, Kompressoren oder Wasserpumpen handeln. Besonders bevorzugt ist eine solche Ausgestaltung dann, wenn eine Reversiereinheit in das Vorgelege integriert ist. Der Zweck dieser Reversiereinheit besteht darin, die Drehrichtung der Reversiereinheit nachgeschalteten Wellen umzukehren, sodass beispielsweise bei einer Landmaschine eine Rückwärtsfahrt möglich ist. Durch Integration dieser Reversiereinheit in das Vorgelege kann bei einer derartigen Ausgestaltung auf Lastwechsel verzichtet werden. Anstelle einer Reversiereinheit kann alternativ auch ein sogenannter Power-Reverser vorgeschaltet werden.

Gemäß einer besonderen Ausführungsart der in Anspruch 1 beanspruchten Erfindung ist in einem ersten Schaltzustand des Vorgeleges die Nebenausgangswelle unmittelbar mit der Hauptausgangswelle gekoppelt, wobei in einem zweiten Schaltzustand des Vorgeleges die Nebenausgangswelle über das erste und das zweite Vorgelege-Zahnradpaar mit der Hauptausgangswelle in Verbindung steht. Somit erfolgt im ersten Schaltzustand keine Über- bzw. Untersetzung über die beiden Zahnradpaare, sondern die Hauptausgangswelle und die Nebenausgangswelle sind unmittelbar über eine Kupplung miteinander verbunden. Die beiden Vorgelege-Zahnradpaare stehen dementsprechend nicht miteinander in Eingriff. Sofern in dem zweiten Schaltzustand gewechselt wird, erfolgt über die beiden Vorgelege-Zahnradpaare eine "doppelte" Über- bzw. Untersetzung. Im Falle einer Übersetzung stellt der erste Schaltzustand den hohen Lastzustand Hi und der zweite Schaltzustand den niedrigen Lastzustand Lo dar. Dementsprechend ist im Falle einer Untersetzung der erste Schaltzustand der niedrige Lastzustand Lo und der zweite Schaltzustand der hohe Lastzustand Hi.

Eine solche Ausgestaltung wird üblicherweise auch als Drei-Wellen-Anordnung bezeichnet, da die Hauptausgangswelle und die Nebenausgangswelle koaxial nebeneinander angeordnet sind, sodass eine direkte Kupplung in einfacher Art und Weise möglich ist. Beide Ausgangswellen weisen hierbei unabhängig vom Schaltzustand die gleiche Drehrichtung auf. Somit erfolgt eine Umkehr der Drehrichtung einerseits zwischen der Eingangswelle und der Nebenwelle und andererseits zwischen der Nebenwelle und der Ausgangswelleneinheit. Entsprechend weisen die Eingangs- und die Ausgangswelleneinheit die gleiche Drehrichtung auf.

Gemäß einer Ausgestaltung, die nicht unter den Wortlaut des Anspruchs 1 fällt, kann die Drehrichtung der Hauptausgangswelle gegenüber der Drehrichtung der Eingangswelle umgekehrt werden. Diese erfolgt dadurch, dass die Nebenausgangswelle in einem ersten Schaltzustand des Vorgeleges über das erste Vorgelege-Zahnradpaar oder in einem zweiten Schaltzustand des Vorgeleges über das zweite Vorgelege-Zahnradpaar mit der Hauptausgangswelle in Verbindung steht. Entsprechend erfolgt somit zwischen den Ausgangswellen eine Umkehr der Drehrichtung. Eine solche Ausgestaltung wird deshalb auch als Vier-Wellen-Anordnung bezeichnet. Eines der Vorgelege-Zahnradpaare ist hierbei übersetzt und das andere Vorgelege-Zahnradpaar untersetzt. Es ist aber auch möglich, dass ein Vorgelege-Zahnradpaar so ausgestaltet ist, dass weder eine Über- noch eine Untersetzung erfolgen, sodass lediglich die Drehrichtung umgekehrt wird.

Wie zuvor erläutert, weist jedes Zahnradpaar der Vorschalt- und der Nachschaltgruppe eine eigene Kupplung auf. Hinzu kommen zwei zusätzliche Kupplungen für das Vorgelege. Die Ansteuerung dieser Kupplungen erfolgt bevorzugt über eine hydraulische Ansteuerungsanordnung. Ein weiterer Vorteil dieser Erfindung liegt darin, dass die hydraulische Ansteuerungsanordnung unabhängig von der Anzahl der Zahnradpaare bzw. der Gangschaltvarianten stets identisch ist, sodass auch bei einer nachträglichen Anpassung kein Wechsel hydraulischer Ansteuerungsanordnung erforderlich ist. Grundsätzlich lässt sich eine Vielzahl von unterschiedlichen Gangschaltvarianten realisieren, wobei bevorzugt die Vorschaltgruppe und/oder die Nachschaltgruppe vier Zahnradpaare aufweisen.

Im Folgenden wird die Erfindung anhand eines Ausführungsbeispiels erläutert.

Es zeigen:
Figur 1 Eine schematische Darstellung einer landwirtschaftlichen Arbeitsmaschine,
Figur 2 ein erfindungsgemäßes Lastschaltgetriebe mit 32 Gangschaltvarianten,
Figur 3 eine alternative Ausgestaltung des Lastschaltgetriebes gemäß Fig. 2, die nicht unter den Wortlaut des Anspruchs 1 fällt,
Figur 4 ein bevorzugtes Schaltprinzip des erfindungsgemäßen Lastschaltgetriebes.

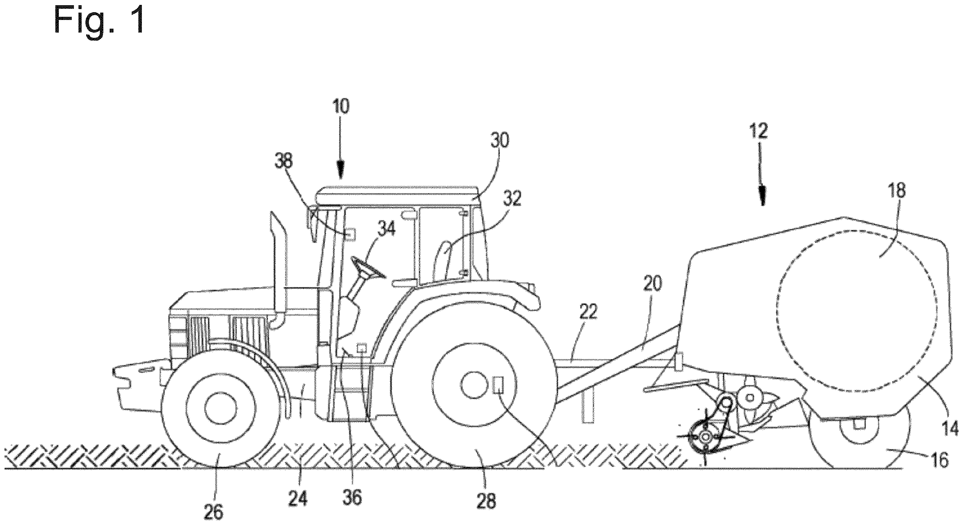

Die Figur 1 zeigt eine landwirtschaftliche Arbeitsmaschine in Form eines Traktors 10 und eines vom Traktor gezogenen beliebigen Gerätes 12, das im Ausführungsbeispiel rein exemplarisch als Rundballenpresse ausgeführt ist. Das Gerät 12 umfasst ein auf Rädern 16 abgestütztes Fahrgestell 14 mit einer Ballenbildungskammer 18. Das Gerät 12 wird über eine Deichsel 20 vom Traktor 10 gezogen. Ihre antreibbaren Elemente werden mittels einer Zapfwelle 22 vom Traktor 10 angetrieben.

Der Traktor 10 umfasst ein Fahrgestell 24, das sich auf vorderen, lenkbaren Rädern 26 und rückwärtig angetriebenen Rädern 28 abstützt. Ein Bedienerarbeitsplatz mit einem Sitz 32 befindet sich in einer Kabine 30. Vom Sitz aus sind ein Lenkrad 34, ein Gaspedal 36 und eine Bedienerstelle 38 betätigbar.

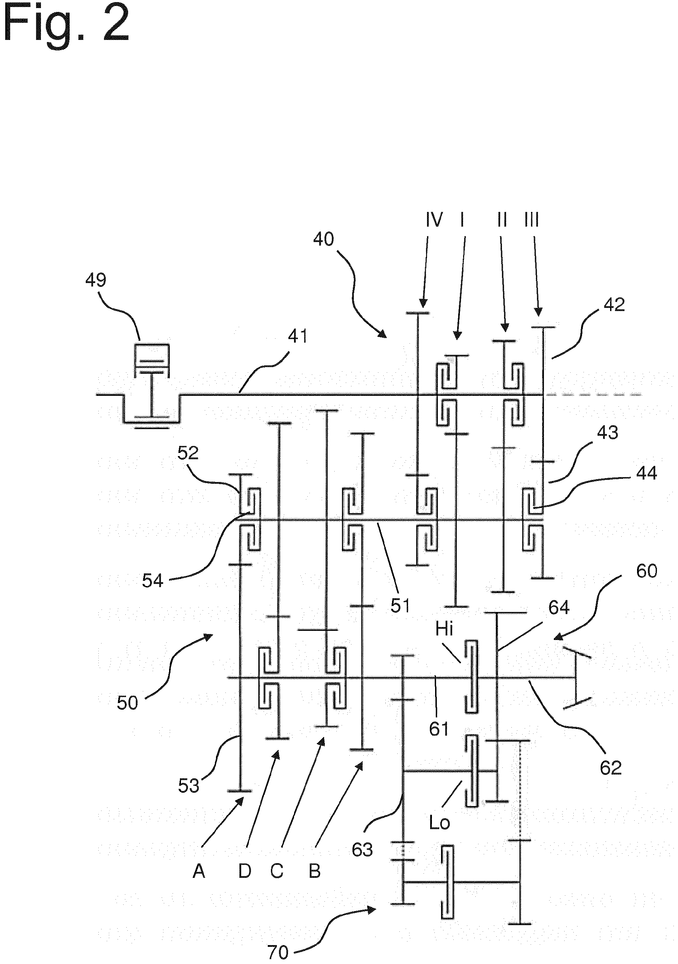

Die Figur 2 zeigt ein schematisches Schaubild des erfindungsgemäßen Lastschaltgetriebes. Das Lastschaltgetriebe weist eine Eingangswelle 41 und eine Ausgangswelleneinheit bestehend aus einer Nebenausgangswelle 61 und einer Hauptausgangswelle 62 auf, wobei zwischen der Eingangswelle 41 und der Ausgangswelleneinheit eine Nebenwelle 51 parallel versetzt angeordnet ist. An der Eingangswelle 41 ist eine Antriebsmaschine 49 vorgesehen, die ein Drehmoment auf die Eingangswelle 41 überträgt. Dieses Drehmoment wird von der Eingangswelle 41 über eine Vorschaltgruppe 40 auf die Nebenwelle 51 übertragen, wobei wiederum zwischen der Nebenwelle und der Nebenausgangswelle 61 eine Drehmoment-Übertragung über die Nachschaltgruppe 50 erfolgt.

In dem exemplarisch gezeigten Ausführungsbeispiel verfügt die Vorschaltgruppe 40 über insgesamt vier Zahnradpaare I, II, III und IV bestehend jeweils aus einem Antriebszahnrad 42 und einem Abtriebszahnrad 43, die über eine Kupplung 44 miteinander in Eingriff gebracht werden können. Diese vier Zahnradpaare I, II, III und IV zeichnen sich durch unterschiedliche Übersetzungsverhältnisse aus. Beispielsweise weist das Zahnradpaar I ein relativ kleines Antriebszahnrad 42 und ein großes Abtriebszahnrad 43 auf. Sofern diese Zahnräder miteinander in Eingriff stehen, wird die Drehzahl des Abtriebszahnrades 43 verringert und zugleich das Drehmoment erhöht. Im Vergleich dazu weist das Zahnradpaar IV ein größeres Antriebszahnrad 42 und ein kleineres Abtriebszahnrad 43 auf, wodurch die Drehzahl des Abtriebszahnrades 43 erhöht und das Drehmoment verringert wird.

Zur Übertragung des Drehmomentes von der Eingangswelle 41 auf die Nebenwelle 51 sind die Antriebszahnräder 42 der Vorschaltgruppe 40 auf der Eingangswelle 41 und die Abtriebszahnräder 43 auf der Nebenwelle 51 angeordnet. Jeweils zwei der Kupplungen 44 der Zahnradpaare I, II, III und IV sind hierbei auf der Eingangswelle 41 und die anderen beiden Kupplungen 44 auf der Nebenwelle 51 angeordnet. Hierdurch kann in Richtung der Drehachse der Eingangswelle 41 bzw. der Nebenwelle 51 der Bauraum möglichst kompakt gehalten werden. Es sind jedoch auch Ausgestaltungen möglich, bei denen alle Kupplungen 44 ausschließlich auf der Eingangswelle 41 oder auf der Nebenwelle 51 angeordnet sind.

Die Übertragung des Drehmomentes von der Nebenwelle 51 auf die Ausgangswelleneinheit erfolgt über eine Nachschaltgruppe 50. Hierzu sind die Antriebszahnräder 52 auf der Nebenwelle 51 und die Abtriebszahnräder 53 auf der Nebenausgangswelle 61 angeordnet. Auch die einzelnen Zahnradpaare A, B, C und D der Nachschaltgruppe 50 sind über jeweils zugeordnete Kupplungen 54 zu- bzw. abkoppelbar, wobei in dem gezeigten Beispiel zwei der Kupplungen 54 auf der Nebenwelle 51 und die anderen beiden Kupplungen 54 auf der Nebenausgangswelle 61 angeordnet sind. Auch hier können die Kupplungen 54 ausschließlich auf der Nebenwelle 51 oder der Nebenausgangswelle 61 angeordnet sein. Zwischen der Nebenausgangswelle 61 und der Hauptausgangswelle 62 ist ein Vorgelege 60 angeordnet, über das die Nebenausgangswelle 61 mit der Hauptausgangswelle 62 in Verbindung steht. Das Vorgelege 60 weist eine Kupplung Hi auf, mit der die

Nebenausgangswelle 61 unmittelbar mit der Hauptausgangswelle 62 gekoppelt werden kann. Hierzu sind die beiden Ausgangswellen 61, 62 nebeneinander und koaxial zueinander angeordnet, wobei die Kupplung Hi eine unmittelbare Drehmoment-Übertragung ermöglicht, sodass sowohl das übertragene Drehmoment als auch die Drehzahl nach Einkupplung unverändert bleiben. Eine solche Verbindung stellt einen ersten Schaltzustand des Vorgeleges 60 dar, der einen hohen Lastzustand beschreibt.

In einem zweiten Schaltzustand des Vorgeleges 60 steht die Nebenausgangswelle 61 über ein erstes und ein zweites Vorgelege-Zahnradpaar 63, 64 mit der Hauptausgangswelle 62 in Verbindung. Hierbei kann das Abtriebszahnrad des ersten Vorgelege-Zahnradpaares 63 über eine Kupplung Lo mit dem Antriebszahnrad des zweiten Vorgelege-Zahnradpaares 64 gekoppelt werden. Das Antriebszahnrad des ersten Vorgelege-Zahnradpaares 63 ist hierbei auf der Nebenausgangswelle 61 und das Abtriebszahnrad des zweiten Vorgelege-Zahnradpaares 64 auf der Hauptausgangswelle 62 angeordnet. Beide Vorgelege-Zahnradpaare 63, 64 sind hierbei derart ausgestaltet, dass eine Übersetzung einer Reduzierung der Drehzahl und eine Erhöhung des Drehmomentes erfolgt. Der zweite Schaltzustand definiert einen niedrigen Lastzustand.

Unabhängig von dem Schaltzustand des Vorgeleges 60 weisen die Nebenwellen 61, 62 stets die gleiche Drehrichtung auf, die gegenüber der Drehrichtung der Eingangswelle 41 unverändert ist.

Die Anzahl der Gangschaltvarianten ergibt sich nunmehr aus einer Multiplikation der Zahnradpaare der Vorschaltgruppe 40, der Nachschaltgruppe 50 und den Schaltzuständen des Vorgeleges 60. Insgesamt sind somit 32 Gänge realisierbar. Durch Entnahme beispielsweise des Zahnradpaares IV und des Zahnradpaares D verringert sich die Anzahl der Gangschaltvarianten auf nur noch 18.

Darüber hinaus verfügt das Lastschaltgetriebe über eine Reversiereinheit 70, die in das Vorgelege 60 integriert ist.

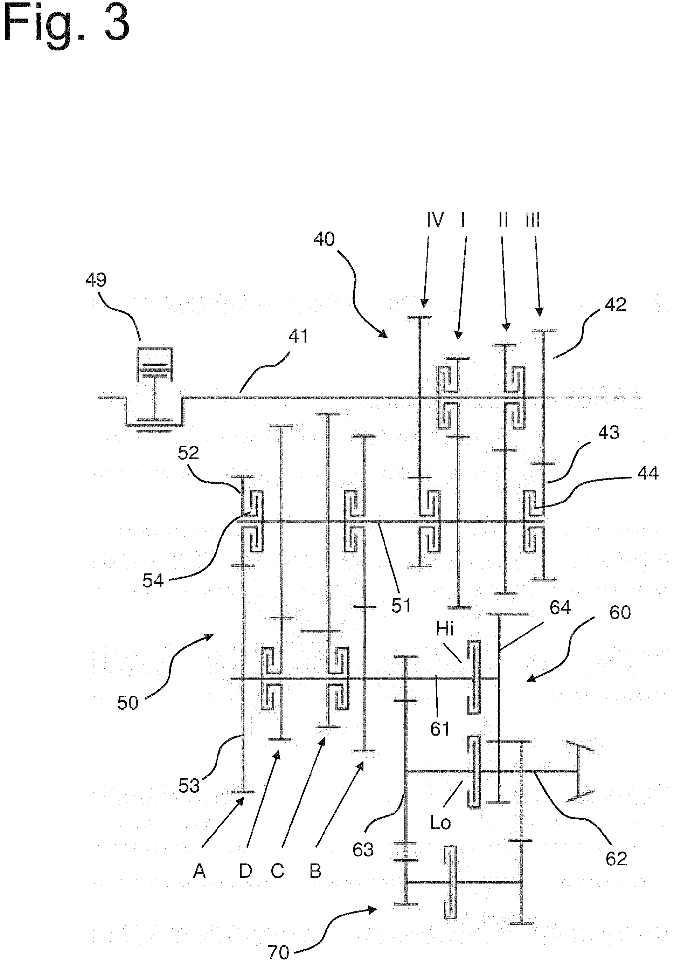

Die Figur 3 zeigt eine alternative Ausgestaltung des Lastschaltgetriebes gemäß der Figur 2, die nicht unter den Wortlaut des Anspruchs 1 fällt, die sich in der Ausgestaltung des Vorgeleges 60 unterscheidet. Im Gegensatz zu der Figur 2 sind die Ausgangswellen 61, 62 nicht unmittelbar miteinander koppelbar. Vielmehr wird ein erster Schaltzustand über das erste Vorgelege-Zahnradpaar 63 und ein zweiter Schaltzustand über das zweite Vorgelege-Zahnradpaar 64 realisiert. Das erste Vorgelege-Zahnradpaar 63 kann hierbei über die Kupplung Lo eingekoppelt werden und definiert einen niedrigen Lastzustand, während das zweite Vorgelege-Zahnradpaar 64 über die Kupplung Hi angekoppelt wird und einen hohen Lastzustand definiert. Die übrigen Komponenten sind analog zu dem Lastschaltgetriebe gemäß der Figur 2 ausgebildet. Insbesondere verfügt auch hier die Vorschaltgruppe 40 über vier Zahnradpaare I, II, III und IV und auch die Nachschaltgruppe 50 über vier Zahnradpaare A, B, C und D.

Der wesentliche Unterschied zu dem Lastschaltgetriebe gemäß der Figur 2 besteht darin, dass zwischen der Nebenausgangswelle 61 und der Hauptausgangswelle 62 in Umkehr der Drehrichtung erfolgt. Insgesamt erfolgt sowohl über die Vorschaltgruppe 40, also auch über die Nachschaltgruppe 50 und das Vorgelege 60 eine Umkehr der Drehrichtung, sodass die Hauptausgangswelle 62 eine gegenüber der Eingangswelle 41 umgedrehte Drehrichtung aufweist. Bei einer Ausgestaltung gemäß der Figur 2 weisen die Eingangswelle 41 und die Hauptausgangswelle 62 die gleiche Drehrichtung auf.

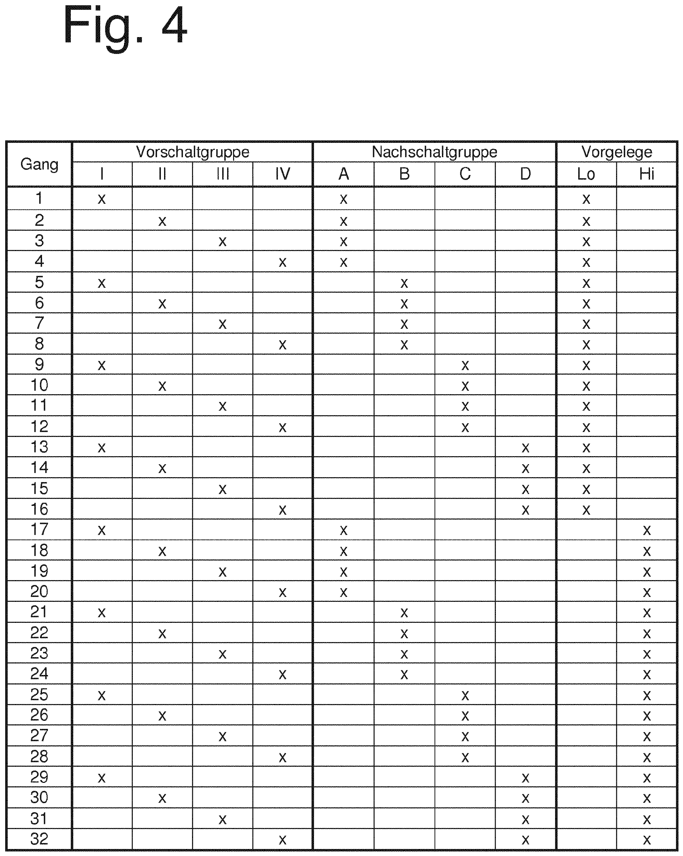

Die Figur 4 zeigt ein bevorzugtes Schaltprinzip des Lastschaltgetriebes. Es wird gezeigt, wie das Lastschaltgetriebe durchlaufen werden soll, um von einer niedrigen Gangschaltvariante möglichst kontinuierlich in eine hohe Gangschaltvariante übergehen zu können. Hierbei bildet die Vorschaltgruppe 40 eine erste Schaltebene, die Nachschaltgruppe 50 eine zweite Schaltebene und das Vorgelege 60 eine dritte Schaltebene.

Zunächst wird die Vorschaltgruppe 40 auf das Zahnradpaar I, die Nachschaltgruppe 50 auf das Zahnradpaar A und das Vorgelege 60 in den Schaltzustand Lo gebracht. Zur Erhöhung des Ganges wird nunmehr zunächst die Vorschaltgruppe 40 durchlaufen, während sowohl die Nachschaltgruppe 50 als auch das Vorgelege 60 unverändert bleibt. Zur weiteren Erhöhung wird dieser Vorgang bei einer nacheinander geschalteten Erhöhung der Nachschaltgruppe 50 wiederholt, bis alle Zahnradpaare A, B, C und D der Nachschaltgruppe 50 durchlaufen wurden.

In einem weiteren Schritt wird dann das Vorgelege 60 in den Schaltzustand Hi gebracht und das zuvor erläuterte Schaltprinzip wiederholt.

## Patentansprüche

1. Lastschaltgetriebe für eine Landmaschine mit einem Getriebegehäuse, einer Eingangswelle (41) und einer Ausgangswelleneinheit,
wobei sich die Eingangswelle (41) und die Ausgangswelleneinheit zumindest abstandsweise innerhalb des Getriebegehäuses erstrecken,
wobei eine Nebenwelle (51) parallel versetzt zwischen der Eingangswelle (41) und der Ausgangswelleneinheit innerhalb des Getriebegehäuses angeordnet ist,
wobei die Eingangswelle (41) und die Nebenwelle (51) über eine Vorschaltgruppe (40) und die Nebenwelle (51) und die Ausgangswelleneinheit über eine Nachschaltgruppe (50) miteinander in Verbindung stehen,
wobei jede Schaltgruppe (40, 50) zumindest zwei einzelne zu- oder abkoppelbare Zahnradpaare aufweist und
wobei die Ausgangswelleneinheit aus einer Hauptausgangswelle (62) und einer Nebenausgangswelle (61) gebildet ist, die über ein Vorgelege (60) miteinander koppelbar sind,
**dadurch gekennzeichnet, dass**
die Hauptausgangswelle (62) und die Nebenausgangswelle (61) nebeneinander und koaxial zueinander angeordnet sind,
wobei das Vorgelege eine Kupplung aufweist, welche die Nebenausgangswelle (61) in einem ersten Schaltzustand unmittelbar mit der Hauptausgangswelle (62) koppelt, sodass sowohl das übertragene Drehmoment als auch die Drehzahl beim Schliessen der Kupplung unverändert bleiben.

2. Lastschaltgetriebe nach Anspruch 1, wobei Antriebszahnräder (42) der Vorschaltgruppe (40) auf der Eingangswelle (41) und Abtriebszahnräder (43) der Vorschaltgruppe (40) auf der Nebenwelle (51) angeordnet sind.

3. Lastschaltgetriebe nach Anspruch 1 oder 2, wobei Antriebszahnräder (52) der Nachschaltgruppe (50) auf der Nebenwelle (51) und Abtriebszahnräder (53) der Nachschaltgruppe (50) auf der Nebenausgangswelle (61) angeordnet sind.

4. Lastschaltgetriebe nach einem der Ansprüche 1 bis 3, wobei das Vorgelege (60) ein erstes und ein zweites Vorgelege-Zahnradpaar (63, 64) aufweist.

5. Lastschaltgetriebe nach Anspruch 4, wobei an einem ersten Schaltzustand des Vorgeleges (60) die Nebenausgangswelle (61) unmittelbar mit der Hauptausgangswelle (62) gekoppelt ist und in einem zweiten Schaltzustand des Vorgeleges (60) die Nebenausgangswelle (61) über das erste und das zweite Vorgelege-Zahnradpaar (63, 64) mit der Hauptausgangswelle (62) in Verbindung steht.

6. Lastschaltgetriebe nach einem der Ansprüche 1 bis 5, wobei jedes Zahnradpaar der Vor- und der Nachschaltgruppe (40, 50) eine separat zugeordnete Kupplung (44, 54) aufweist.

7. Lastschaltgetriebe nach einem der Ansprüche 1 bis 6, wobei die Drehrichtung der Hauptausgangswelle (62) über eine Reversiereinheit (70) umgekehrt werden kann, wobei die Reversiereinheit (70) in das Vorgelege (60) integriert ist.

8. Lastschaltgetriebe nach einem der Ansprüche 1 bis 7, wobei die Vorschaltgruppe (40) und/oder die Nachschaltgruppe (50) vier Zahnradpaare aufweist.

## Claims

1. Powershift transmission for an agricultural machine having a transmission housing, an input shaft (41) and an output shaft unit,
wherein the input shaft (41) and the output shaft unit extend at least partially within the transmission housing,
wherein an auxiliary shaft (51) is arranged offset in parallel between the input shaft (41) and the output shaft unit within the transmission housing,
wherein the input shaft (41) and the auxiliary shaft (51) are connected to each other via a front-mounted range unit (40), and the auxiliary shaft (51) and the output shaft unit are connected to each other via a rear-mounted range unit (50),
wherein each range unit (40, 50) has at least two individual gearwheel pairs which can be coupled and decoupled, and
wherein the output shaft unit is formed from a main output shaft (62) and an auxiliary output shaft (61), which output shafts can be coupled to each other via a layshaft (60),
**characterized in that**
the main output shaft (62) and the auxiliary output shaft (61) are arranged next to each other and coaxially with respect to each other,
wherein the layshaft has a clutch which couples the auxiliary output shaft (61) directly to the main output shaft (62) in a first shifting state such that both the transmitted torque and the rotational speed remain unchanged when the clutch is closed.

2. Powershift transmission according to Claim 1, wherein drive gearwheels (42) of the front-mounted range unit (40) are arranged on the input shaft (41) and output gearwheels (43) of the front-mounted range unit (40) are arranged on the auxiliary shaft (51).

3. Powershift transmission according to Claim 1 or 2, wherein drive gearwheels (52) of the rear-mounted range unit (50) are arranged on the auxiliary shaft (51) and output gearwheels (53) of the rear-mounted range unit (50) are arranged on the auxiliary output shaft (61).

4. Powershift transmission according to one of Claims 1 to 3, wherein the layshaft (60) has a first and a second layshaft gearwheel pair (63, 64).

5. Powershift transmission according to Claim 4, wherein, at a first shifting state of the layshaft (60), the auxiliary output shaft (61) is coupled directly to the main output shaft (62), and, in a second shifting state of the layshaft (60), the auxiliary output shaft (61) is connected to the main output shaft (62) via the first and the second layshaft gearwheel pair (63, 64).

6. Powershift transmission according to one of Claims 1 to 5, wherein each gearwheel pair of the front-mounted range unit (40) and of the rear-mounted range unit (50) has a separately assigned clutch (44, 54).

7. Powershift transmission according to one of Claims 1 to 6, wherein the direction of rotation of the main output shaft (62) can be reversed via a reversing unit (70), the reversing unit (70) being integrated in the layshaft (60) .

8. Powershift transmission according to one of Claims 1 to 7, wherein the front-mounted range unit (40) and/or the rear-mounted range unit (50) have/has four gearwheel pairs.

## Revendications

1. Boîte de vitesses commandée en charge pour une machine agricole avec un carter de boîte de vitesses, un arbre d'entrée (41) et une unité d'arbre de sortie,
l'arbre d'entrée (41) et l'unité d'arbre de sortie s'étendant au moins à distance à l'intérieur du carter de boîte de vitesses,
un arbre secondaire (51) étant agencé parallèlement en décalage entre l'arbre d'entrée (41) et l'unité d'arbre de sortie à l'intérieur du carter de boîte de vitesses, l'arbre d'entrée (41) et l'arbre secondaire (51) étant reliés entre eux par l'intermédiaire d'un groupe de montage en amont (40) et l'arbre secondaire (51) et l'unité d'arbre de sortie étant reliés entre eux par l'intermédiaire d'un groupe de montage en aval (50),
chaque groupe de montage (40, 50) présentant au moins deux paires de roues dentées individuelles pouvant être couplées ou découplées et
l'unité d'arbre de sortie étant formée d'un arbre de sortie principal (62) et d'un arbre de sortie secondaire (61) qui peuvent être couplés entre eux par l'intermédiaire d'un renvoi (60),
**caractérisée en ce que**
l'arbre de sortie principal (62) et l'arbre de sortie secondaire (61) sont agencés l'un à côté de l'autre et coaxialement l'un à l'autre,
le renvoi présentant un accouplement qui, dans un premier état de commutation, couple directement l'arbre de sortie secondaire (61) à l'arbre de sortie principal (62), de telle sorte qu'aussi bien le couple transmis que la vitesse de rotation restent inchangés lors de la fermeture de l'accouplement.

2. Boîte de vitesses commandée en charge selon la revendication 1, dans laquelle les roues dentées d'entraînement (42) du groupe de montage en amont (40) sont agencées sur l'arbre d'entrée (41) et les roues dentées entraînées (43) du groupe de montage en amont (40) sont agencées sur l'arbre secondaire (51).

3. Boîte de vitesses commandée en charge selon la revendication 1 ou 2, dans laquelle les roues dentées d'entraînement (52) du groupe de montage en aval (50) sont agencées sur l'arbre secondaire (51) et les roues dentées entraînées (53) du groupe de montage en aval (50) sont agencées sur l'arbre de sortie secondaire (61).

4. Boîte de vitesses commandée en charge selon l'une quelconque des revendications 1 à 3, dans laquelle le renvoi (60) présente une première et une deuxième paire de roues dentées de renvoi (63, 64).

5. Boîte de vitesses commandée en charge selon la revendication 4, dans laquelle, dans un premier état de commutation du renvoi (60), l'arbre de sortie secondaire (61) est couplé directement à l'arbre de sortie principal (62) et, dans un deuxième état de commutation du renvoi (60), l'arbre de sortie secondaire (61) est relié à l'arbre de sortie principal (62) par l'intermédiaire de la première et de la deuxième paire de roues dentées de renvoi (63, 64).

6. Boîte de vitesses commandée en charge selon l'une quelconque des revendications 1 à 5, dans laquelle chaque paire de roues dentées du groupe de montage en amont et en aval (40, 50) présente un accouplement (44, 54) qui lui est associé séparément.

7. Boîte de vitesses commandée en charge selon l'une quelconque des revendications 1 à 6, dans laquelle la vitesse de rotation de l'arbre de sortie principal (62) peut être inversée par une unité d'inversion (70), l'unité d'inversion (70) étant intégrée dans le renvoi (60) .

8. Boîte de vitesses commandée en charge selon l'une quelconque des revendications 1 à 7, dans laquelle le groupe de montage en amont (40) et/ou le groupe de montage en aval (50) présentent quatre paires de roues dentées.
